# EUROPÄISCHE PATENTSCHRIFT

(11) **EP 0 709 316 B1**
(45) Veröffentlichungstag und Bekanntmachung des Hinweises auf die Patenterteilung: **21.04.1999**
(21) Anmeldenummer: 95116462.3
(22) Anmeldetag: 19.10.1995
(51) Int. Cl.: B65G 47/64

(54) **Übergabevorrichtung für auf einem umlaufenden endlosen Zuführband in Querreihen ankommenden Gegenständen**
Delivery apparatus for articles arriving in transverse rows on a circulating endless feed belt
Dispositif de transfert de rangées transversales d'objets alimentés d'une bande convoyeuse sans fin

(30) Priorität: 26.10.1994 DE 4438207
(43) Veröffentlichungstag der Anmeldung: 01.05.1996
(73) Patentinhaber: Wilhelm Hogenkamp Verpackungstechnik, 30161 Hannover (DE)
(72) Erfinder: Hogenkamp, Wilhelm, D-30161 Hannover (DE)
(74) Vertreter: Rehberg, Elmar, Dipl.-Ing.

(56) Entgegenhaltungen:
- EP-A- 0 558 123
- AT-A- 268 144
- US-A- 3 605 982
- US-A- 4 867 299

## Beschreibung

Die Erfindung betrifft eine Übergabevorrichtung für auf einem umlaufenden endlosen Zuführband in Querreihen ankommende Gegenstände, insbesondere Süßwarenteile, wie Schokoladetafeln, Riegel, Pralinen od. dgl., mit den im Oberbegriff des Anspruchs 1 angegebenen Merkmalen. Eine solche Übergabevorrichtung wird insbesondere vor einer Reihe von Packmaschinen eingesetzt, auf die ein Strom von in Querreihen auf einem Zuführband ankommenden Gegenständen aufgeteilt werden muß. In der Draufsicht nimmt das Abführband relativ zu dem Zuführband einen Winkel von 90° ein. Es kommt darauf an, auf dem Anführband eine ununterbrochene Reihe von Gegenständen für einen kontinuierlichen Betrieb der Packmaschine bzw. einer anderen Verarbeitungsstelle zu ermöglichen.

Eine Übergabevorrichtung der eingangs beschriebenen Art ist aus der US-A-3,605,982 bekannt. Dem Zuführband ist ein in gleicher Höhe und gleicher Förderrichtung arbeitendes Weitergabeband zugeordnet. Unterhalb der Ebene des Zuführbandes ist ein Abführband nachgeschaltet, welches die auf dem Zuführband ankommenden Gegenstände seitlich quer zur Förderrichtung des Zuführbandes abführt. Zwischen Zuführband und Abführband ist ein Übertragungsband vorgesehen, dessen Förderrichtung mit der des Abführbandes übereinstimmt. Das Übertragungsband ist um eine sich quer zur Förderrichtung des Zuführbandes erstreckende Achse schwenkbar, wobei diese Achse in der Längsmitte des Übertragungsbandes angeordnet ist. Die Gegenstände gelangen von dem Zuführband auf das Übertragungsband nur durch Herabrutschen an der schiefen Ebene des Übertragungsbandes. Das Weitergabeband ist ebenfalls um eine sich quer zur Förderrichtung erstreckende Achse schwenkbar, wobei diese Achse am Ende des Weitergabebandes vorgesehen ist. Es ist ein gemeinsamer Schwenkantrieb für die Verschwenkbewegungen des Übertragungsbandes und des Weitergabebandes vorgesehen, der an dem Weitergabeband angreift. Um auch das Übertragungsband zu verschwenken, ist dieses mit dem Anfang des Weitergabebandes mechanisch beweglich gekoppelt, also durch eine gelenkig angeordnete Stange o. dgl. verbunden. Die Anordnung nur eines Schwenkantriebes für die beiden Schwenkbewegungen des Weitergabebandes einerseits und des Übertragungsbandes andererseits vereinfacht vorteilhaft den baulichen Aufwand der Übergabevorrichtung. In nachteiliger Weise gerät jedoch das Übertragungsband bei der Abnahme der Gegenstände von dem Zuführband in eine erhebliche Schräglage, so daß die Gefahr besteht, daß die in Querreihen ankommenden Gegenstände auf dem Übertragungsband verrutschen können. Über eine Anschlagleiste wird das Herabfallen der Gegenstände von dem Übertragungsband verhindert. Die erhebliche Schräglage des Übertragungsbandes zum Aufnahmezeitpunkt für Gegenstände, die auf dem Zuführband herangeführt werden, ist erforderlich, damit die Gegenstände überhaupt auf das Übertragungsband gelangen, weil ein gesonderter Antrieb für die erforderliche Bewegung nicht vorgesehen ist und insoweit nur die Schwerkrafteinwirkung auf die Gegenstände genutzt wird. Das Abführband schließt kopfseitig an das Übertragungsband an und die Förderrichtung des Übertragungsbandes stimmt mit derjenigen des Abführbandes überein, sodaß die Gegenstände nur einer nach dem anderen auf das Abführband gelangen können. Das Abführband wird von der Packmaschine gesteuert angetrieben, d.h. es kann im Anschluß an die Übergabe einer einer Querreihe entsprechenden Anzahl von Gegenständen von dem Übergabeband auf das Abführband weiterlaufen, sodaß dann notwendigerweise auf dem Abführband eine Lücke entsteht.

Eine Übergabevorrichtung einer anderen Art ist aus der DE-C-28 31 323 bekannt. Das Zuführband weist an seinem der Förderrichtung zugekehrten Ende eine nach unten verschwenkbare Nase auf. Es ist ein längenveränderliches Übertragungsband vorgesehen, welches um eine quer zur Förderrichtung schwenkbare Achse in zwei Stellungen verschwenkbar ist, wobei es in der einen Stellung an die abgesenkte Nase des Zuführbandes Anschluß hat und so Gegenstände aufnehmen kann, während es in der anderen Stellung Anschluß an das Abführband besitzt und so eine Querreihe von Gegenständen auf einmal an das Abführband abgegeben werden können. Wenn die Nase des Zuführbandes nicht abgesenkt ist, hat sie Anschluß an ein Weitergabeband, welches sich in horizontaler Förderebene an das Zuführband anschließt. Vorteilhaft gelangen damit die Gegenstände ohne Schräglage von dem Zuführband auf das Weitergabeband. Vor der Verarbeitungsstelle jedoch müssen die Gegenstände in dem nach unten abgesenkten Teil des Weitergabebandes sowie auf dem Übertragungsband in Schräglage gefördert werden. Dieser Schrägwinkel kann je nach der Ausbildung der Gegenstände nicht beliebig groß gewählt werden, weil es erforderlich ist, die Querreihenausrichtung der Gegenstände auch während der Übergabe beizubehalten. Durch die Anordnung des Übertragungsbandes und des Abführbandes unterhalb der Förderebene des Zuführbandes und des Weitergabebandes besteht nur eine eingeschränkte Sicht, die aber erforderlich ist, wenn Betriebsstörungen behoben oder Reinigungsarbeiten durchgeführt werden müssen. Durch die Anordnung des Übertragungsbandes, seines erforderlichen Schwenkantriebes und seiner längenveränderlichen Aufhängung bekommt das Weitergabeband in Förderrichtung notwendigerweise eine relativ große Länge, so daß diese Einheit der Übertragungsvorrichtung relativ lang baut. Die bekannte Übertragungsvorrichtung verfolgt jedoch folgerichtig den Gedanken, einen Strom von Gegenständen durch eine weichenartige Bewegung des Endes des Zuführbandes selbst aufzuteilen. Für die aufeinander abgestimmten Bewegungen der Antriebe der Bänder sind entsprechende Fühl- und Steuermittel vorgesehen.

Eine weitere Übergabevorrichtung ist aus der AT-A-268 144 bekannt. Hier ist das Zuführband geteilt ausgebildet, insbesondere um es weichenartig nach aufwärts in eine Schräglage verschwenken zu können. Das abgeteilte Ende des Zuführbandes kann aber auch in eine nach unten weisende Schräglage verschwenkt werden, wenn die Ebene des Abführbandes unterhalb der Ebene des Zuführbandes und des Weitergabebandes angeordnet ist. Das jeweils vorgesehene Übertragungsband arbeitet als umlaufendes Band in Förderrichtung. Es ist selbst wiederum geteilt ausgebildet, damit sein dem Ende des Zuführbandes zugekehrter Anfang aus einer Horizontallage in eine Schräglage verschwenkt werden kann und umgekehrt. Auch das in der Förderebene anschließende Weitergabeband ist geteilt ausgebildet, und sein dem weichenartig verschwenkbaren Ende des Zuführbandes zugekehrtes Teil kann ebenfalls aus einer Horizontallage um eine quer zur Förderrichtung sich erstreckende Achse in eine Schräglage verschwenkt werden. In dieser Schräglage können zwar keine Gegenstände aufgenommen werden, jedoch erweist sich der damit vergrößerte Durchlaßquerschnitt, insbesondere für relativ hohe Gegenstände als vorteilhaft. Es ist ein wippenartiges Gestänge mit einem Antrieb vorgesehen, um die abgeteilten Enden des Zuführbandes einerseits und des Abführbandes sowie des Weitergabebandes andererseits gegenläufig verschwenken zu können, so daß auf diese Art und Weise die hintereinander ankommenden Gegenstände auf zwei Förderebenen verteilt werden können. Das dabei eingesetzte Übertragungsband ist nicht hin- und herbeweglich angetrieben, sondern als endlos umlaufendes Band ausgebildet. Es benötigt daher eine Bandführung.

Der Erfindung liegt die Aufgabe zugrunde, eine Übertragungsvorrichtung der eingangs beschriebenen Art bereitzustellen, die mit einem Schwenkantrieb für das Übertragungsband und das Weitergabeband auskommt und trotzdem übermäßige Schräglagen des Übertragungsbandes vermieden werden können, so daß die Gegenstände in Querreihen von dem Übertragungsband schonend aufgenommen und querreihenweise ohne Lückenbildung an das Abführband abgegeben werden können.

Erfindungsgemäß wird dies bei der Übergabevorrichtung der eingangs beschriebenen Art dadurch erreicht, daß das Übertragungsband zum gleichzeitigen Aufschieben einer Querreihe von Gegenständen von dem Übertragungsband auf das Abführband einen hin- und hergehend angetriebenen Schieber mit Band aufweist, und daß das Übertragungsband um die sich quer zur Förderrichtung erstreckende Achse des Weitergabebandes oder um eine jenseits dieser Achse im Unendlichen angeordnete Achse schwenkbar ist.

Dabei kann das Übertragungsband und zumindest der schwenkbare Teil des Weitergabebandes mechanisch fest gekoppelt, insbesondere auf einem gemeinsamen Rahmen angeordnet, sind. Eine weitere Möglichkeit besteht darin, daß das Übertragungsband für seine Bewegung in etwa vertikaler Richtung über translatorische, insbesondere vertikal wirkende, Führungselemente geführt ist.

Die Erfindung greift eine Art von Übergabevorrichtungen auf, bei denen beim querreihenweisen Aufteilen eines Stromes von Gegenständen das Ende des Zuführbandes nicht schwenkbeweglich ist. Da das Abführband ohnehin nicht schwenkbeweglich, sondern lediglich in einer außerhalb der Förderebene des Zuführbandes und des Weitergabebandes liegenden Ebene angeordnet ist, sind gleichsam nur die der Übergabestelle nachgeordneten Anfänge des Weitergabebandes einerseits und des Übertragungsbandes andererseits schwenkbeweglich gestaltet, um die Gegenstände in Querreihen von dem Übertragungsband auf das Abführband aufzuschieben und so auf dem Abführband aneinander anschließende Querreihen zu bilden. Hierzu weist das Übertragungsband zum gleichzeitigen Aufschieben einer Querreihe von Gegenständen von dem Übertragungsband auf das Anführband einen hin- und hergehend angetriebenen Schieber mit Band auf, der in Förderrichtung hin- und hergehend angetrieben und gesteuert ist. Das Abführband ist neben dem Übertragungsband angeordnet und wird quer zur Förderrichtung angetrieben. Beim gemeinsamen Verschwenken des Übertragungsbandes und des Weitergabebandes wird nur ein einziger gemeinsamer Schwenkantrieb genutzt. Ein gegenläufiges Verteilergetriebe wird entbehrlich. Insbesondere wenn das Übertragungsband oberhalb des Weitergabebandes angeordnet ist, ergibt sich eine gute Übersichtlichkeit der Elemente der Übergabevorrichtung, so daß bei Betriebsstörungen leicht und schnell eingegriffen werden kann. Auch die Reinigungsmöglichkeiten sind verbessert, ohne daß es hierzu konstruktiver Besonderheiten bedarf, wie z. B. hochschwenkbarer Bandanfänge o. dgl.. Die an die verschiedenen Verarbeitungsstellen übergebenen Gegenstände gelangen nur einmal in eine Schräglage bzw. werden nur einmal verschwenkt. Bei einem unmittelbaren Übertritt von dem Ende des Zuführbandes auf den Anfang des Weitergabebandes wird jegliche Schräglage der Gegenstände vermieden.

Das Weitergabeband kann auch als geteiltes Band ausgebildet sein. Gleiches gilt für das Zuführband. Die Teilung dieser Bänder erfordert konstruktiv einen gewissen Aufwand und insbesondere auch die Anordnung separater Antriebe für die Teile der Bänder, wenn die Teile der Bänder unterschiedlich gesteuert werden sollen, beispielsweise um Lücken zwischen den Querreihen zu schließen.

Das Übertragungsband und zumindest der schwenkbare Teil des Weitergabebandes können mechanisch fest gekoppelt, insbesondere auf einem gemeinsamen Rahmen angeordnet sein. Der gemeinsame Schwenkantrieb wirkt dann auf diesen Rahmen ein und erbringt in der einen Stellung sowohl einen Anschluß des Übertragungsbandes an das Abführband wie auch einen Anschluß des Weitergabebandes an das Zuführband. In der anderen Stellung schließt lediglich das Übertragungsband an das Zuführband an. Es erübrigt sich eine gesonderte Lagerung für das Übertragungsband. Die Schwenkachse des Weitergabebandes wird hier sinnvoll genutzt. Das Übertragungsband besitzt ohnehin nur eine relativ geringe Ausdehnung in Förderrichtung. Durch die hin- und hergehende Bewegung des Übertragungsbandes - im Gegensatz zu einem endlos umlaufenden Band - kann es selbst konstruktiv sehr einfach ausgebildet werden, wobei eine besondere Bandführung vermieden wird.

Das Übertragungsband und zumindest der schwenkbare Teil des Weitergabebandes können andererseits aber auch mechanisch beweglich gekoppelt sein, wobei für die Bewegung des Übertragungsbandes in etwa vertikaler Richtung translatorische, insbesondere vertikal wirkende, Führungselemente vorgesehen sind. Dies erbringt den Vorteil, daß die Gegenstände auf dem Übertragungsband jederzeit eine horizontal ausgerichtete Lage einnehmen und eine Schräglage vermieden wird. Dies ist insbesondere im Zusammenhang mit der hin- und hergehenden Bewegung des Übertragungsbandes selbst zu sehen, also bei der Aufnahme von Gegenständen einerseits und bei der Abgabe andererseits. Als mechanisch bewegliche Koppel kann eine Koppelstange mit entsprechenden Gelenken vorgesehen sein. Eine Abstimmung der Schwenkbewegung des Weitergabebandes und der vertikalen Bewegung des Übertragungsbandes aufeinander muß vorgesehen sein.

Besonders einfach wird der gemeinsame Antrieb für die Bewegungen des Übertragungsbandes einerseits und des Weitergabebandes andererseits, wenn als gemeinsamer Antrieb ein Kurbeltrieb vorgesehen ist. Ein solcher Kurbeltrieb besitzt zudem eine sinusartige Bewegung, so daß die Annäherung an die Anschlußstellen vorteilhaft vergleichsweise verlangsamt ist.

Das Zuführband kann geteilt ausgebildet sein, wobei dann zwei getrennt steuerbare Antriebe für die beiden in Förderrichtung aneinander anschließenden Teile des Zuführbandes vorgesehen sind. Dies ermöglicht bei entsprechender Steuerung eine Schließung von Lücken zwischen den aufeinander folgenden Querreihen. Bei der letzten Verteilstelle können sogar übergelaufene Gegenstände in den Verarbeitungsprozeß zurückgefördert und damit der letzten Verarbeitungsstelle zugeführt werden.

Das Übertragungsband kann oberhalb oder unterhalb des Weitergabebandes angeordnet sein. Die beiden Übergabestellen zwischen dem Zuführband und dem Weitergabeband einerseits und dem Übertragungsband und dem Abführband andererseits sind damit vertikal übereinander vorgesehen, so daß sich insgesamt eine vorteilhaft kurze Baulänge der gesamten Übergabevorrichtung ergibt.

Das Übertragungsband kann ein bewegliches Band aufweisen, welches mit einem in Förderrichtung des Zuführbandes wirkenden hin- und hergehenden Antrieb versehen ist. Die Förderrichtung des Übertragungsbandes und die Förderrichtung des Zuführbandes stimmen überein bzw. sind entgegengesetzt gerichtet. Die Gegenstände werden somit von dem Band des Übertragungsbandes schonend gefördert.

Das Übertragungsband kann in Förderrichtung kürzer als das Weitergabeband ausgebildet sein. Lediglich wenn das Übertragungsband auch eine Speicherfunktion erfüllen soll und mehrere Querreihen aufgenommen werden sollen, wird seine Ausdehnung in Förderrichtung entsprechend vergrößert. In all diesen Fällen ergibt sich jedoch eine gute Übersicht und eine erleichterte Reinigungsmöglichkeit.

An dem Band des Übertragungsbandes kann ein geführter Schieber angeordnet sein, der mit einem Antrieb verbunden sein kann, wobei mit dem Schieber das Band verbunden ist. Dieses endlose Band läuft jedoch nicht um, sondern wird indirekt über den Schieber hin- und hergehend angetrieben. Damit entfällt eine aufwendige Bandführung, und die Gefahr des Verlaufens eines endlos umlaufenden Bandes ist vermieden.

Der vertikale Versatz der Anfänge des Übertragungsbandes und des Weitergabebandes stimmt vorteilhaft mit dem vertikalen Abstand zwischen Zuführband und Abführband überein, so daß in einer gemeinsamen Stellung das Zuführband an das Weitergabeband Anschluß hat und gleichzeitig auch Anschluß zwischen dem Übertragungsband und dem Abführband besteht. Gegenstände können damit gleichzeitig weitergegeben und in einer anderen Ebene andere Gegenstände abgeführt werden.

Wenn eine feste Kopplung zwischen Übertragungsband und Weitergabeband besteht, können die mechanisch fest miteinander gekoppelten Rahmen des Weitergabebandes und des Übertragungsbandes in einem Winkel zueinander angeordnet sein. Dieser Winkel entspricht zweckmäßig der Hälfte des Winkels der Schräglage bei horizontaler Ausrichtung. Damit wird die mögliche Schräglage der Gegenstände verkleinert, und es ergibt sich eine kurze Baulänge. Es ist nicht erforderlich, das Weitergabeband besonders lang auszubilden bzw. die Schwenkachse des Weitergabebandes in relativ großer Entfernung zum Anfang des Weitergabebandes anzuordnen.

Die Erfindung wird anhand bevorzugter Ausführungsbeispiele weiter erläutert und beschrieben. Es zeigen:
- Figur 1: eine schematisierte Seitenansicht einer ersten Ausführungsform der Übergabevorrichtung, vor der Übernahme einer Querreihe von Gegenständen auf das Übertragungsband,
- Figur 2: die Relativlage der Teile nach der vollständigen Aufnahme einer Querreihe auf dem Übertragungsband,
- Figur 3: die Relativlage der Teile nach dem Anheben des Übertragungsbandes,
- Figur 4: die Relativlage der Teile nach dem Abschieben einer Querreihe von dem Übertragungsband auf das Abführband,
- Figur 5: eine schematisierte Seitenansicht einer zweiten Ausführungsform der Übergabevorrichtung, vor der Übernahme einer Querreihe von Gegenständen auf das Übertragungsband und
- Figur 6: die Relativlage der Teile nach dem Absenken des Übertragungsbandes.

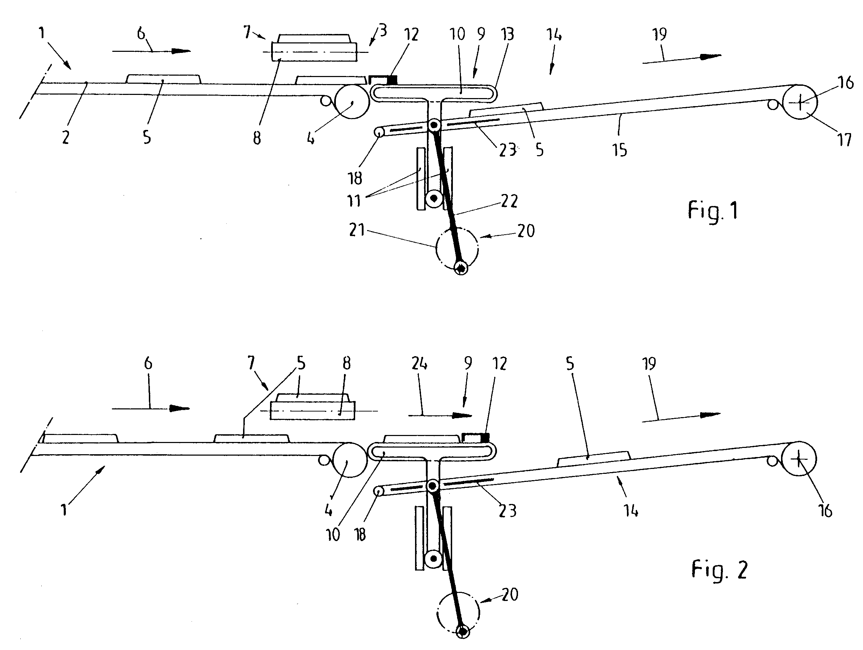

In Figur 1 ist schematisch das Ende eines Zuführbandes 1 dargestellt, dessen endlos umlaufendes Band 2 im Bereich einer Übergabestelle 3 um eine Umlenkwalze 4 geschlungen ist. Statt der Umlenkwalze 4 kann auch eine messerartige Bandkante vorgesehen sein.

Auf dem Zuführband 1 werden Gegenstände 5, in Querreihen nebeneinanderliegend, in Förderrichtung 6 gefördert. Das Zuführband 1 besitzt einen kontinuierlich einwirkenden Antrieb, der hier nicht näher dargestellt ist. Die Umlenkwalze 4 und damit das Ende des Zuführbandes 1 ist ortsfest angeordnet, so daß die Querreihen von Gegenständen 5 immer an der gleichen Stelle der Übergabestelle 3 angeliefert werden.

Oberhalb des Endes des Zuführbandes 1 und damit ausgerichtet zu der Übergabestelle 3 ist ein Abführband 7 vorgesehen, welches sich im wesentlichen senkrecht zu dem Zuführband 1 erstreckt. Auch das Abführband 7 besitzt ein endlos umlaufendes Band 8, welches mit einem eigenen Antrieb versehen ist. Gesteuert über entsprechende Fühl- und Steuermittel kann das Abführband 7 jeweils eine Querreihe von Gegenständen 5 aufnehmen, so daß nunmehr auf dem Abführband 7 die Gegenstände 5 in einer einzigen Reihe hintereinander weitergefördert und einer Verarbeitungsstelle, beispielsweise einer Packmaschine, zugeführt werden.

Wie ersichtlich, ist das Abführband 7 mit seiner Förderebene oberhalb der Förderebene des Zuführbandes 1 angeordnet. Um die Gegenstände 5 querreihenweise von dem Zuführband 1 abzunehmen und auf das Abführband 8 abzugeben, ist ein Übertragungsband 9 vorgesehen, welches einen hier T-förmig ausgebildeten Rahmen 10 aufweist. Dem Rahmen 10 des Übertragungsbandes 9 sind Führungen 11 zugeordnet, beispielsweise Gleitschienen, so daß das Übertragungsband 9 vertikal beweglich geführt ist. Das Übertragungsband 9 weist einen Schieber 12 auf, der mit einem eigenen, hier nicht näher dargestellten hin- und hergehenden Antrieb versehen ist. Der Schieber 12 ist mit einem Band 13 verbunden, welches indirekt über den Schieber 12 angetrieben wird und damit jeweils vor dem Schieber 12 eine Aufnahmefläche für eine Querreihe von Gegenständen 5 auf dem Rahmen 10 bereitstellt.

Unterhalb des Übertragungsbandes 9 ist ein Weitergabeband 14 vorgesehen, welches ein endloses Band 15 aufweist, das mit einem eigenen Antrieb versehen ist. Das Band 15 des Weitergabebandes 14 ist um eine ortsfeste Achse 16 bzw. eine Umlenkwalze 17 schwenkbar, wobei sich bei einer Schwenkbewegung der der Übergabestelle 3 zugekehrte Anfang 18 des Weitergabebandes 14 auf einem Kreisbogen um die Achse 16 bewegt. Auf dem Weitergabeband 14 werden Querreihen von Gegenständen 5, die von dem Übertragungsband 9 nicht übernommen wurden, gemäß Pfeil 19 weitergefördert und einer weiteren Übergabevorrichtung zugeleitet, an der wiederum ein Abzweig von Querreihen von Gegenständen 5 erfolgen kann, wie dies bereits für das dargestellte Abführband 7 aufgezeigt und beschrieben wurde.

Für die Schwenkbewegung des Weitergabebandes 14 und die vertikale Bewegung des Übertragungsbandes 9 mit seinem Rahmen 10 ist ein gemeinsamer Schwenkantrieb 20 vorgesehen, der einen Kurbeltrieb 21 mit Schubstange 22 aufweisen kann. Die Schubstange 22 greift an dem Rahmen 10 des Übertragungsbandes 9 an. Sie kann auch an dem nur teilweise angedeuteten Rahmen 23 des Weitergabebandes 14 angreifen. Die beiden Rahmen 10 und 23 sind mechanisch gekoppelt, wobei die Koppelstelle hier gelenkig ausgebildet ist, um den Bewegungsunterschieden der Vertikalbewegung des Übertragungsbandes 9 und der Schwenkbewegung des Weitergabebandes 14 Rechnung zu tragen.

Das Zuführband 1 und das Weitergabeband 14 können als getrennte separate Teile ausgebildet und angeordnet sein, wie dies anhand der Figur 1 beschrieben wurde. Sowohl das Zuführband 1 wie auch das Weitergabeband 14 können aber auch aus mehreren geteilten Bändern bestehen, wobei dann die Schwenkbeweglichkeit des Weitergabebandes 14 sich nur auf dessen ersten, der Übergabestelle 3 zugeordneten Teil beschränkt. Durch die Hintereinanderschaltung des Zuführbandes 1 und des Weitergabebandes 14 in Förderrichtung 6 wird die Baulänge einer Übergabevorrichtung bestimmt. Es ist aber auch möglich, die Übergabevorrichtung so abzuwandeln, daß das Zuführband 1 und das Weitergabeband 14 ein und dasselbe Band darstellen, so daß gleichsam unmittelbar hinter der Umlenkwalze 17 eine weitere Übergabestelle 3 geschaffen ist. Es versteht sich, daß mindestens zwei hintereinandergeschaltete Übergabevorrichtung vorgesehen sind, wenn ein Strom von in Querreihen ankommenden Gegenständen 5 auf mindestens zwei Weiterverarbeitungsstellen aufgeteilt werden soll.

Die Arbeitsweise einer Übergabevorrichtung wird nachfolgend anhand der Figuren 1 bis 4 beschrieben:
Figur 1 zeigt die abgesenkte Stellung des Übertragungsbandes 9 und des Weitergabebandes 14, so daß das Übertragungsband 9 Anschluß an das Ende des Zuführbandes 1 besitzt. Die unmittelbar am Ende des Zuführbandes 1 befindliche Querreihe von Gegenständen 5 soll von dem Übertragungsband 9 aufgenommen werden. Zu diesem Zweck befindet sich der Schieber 12 mit Hilfe seines Antriebes in einer der Übergabestelle 3 zugekehrten Stellung, so daß er während der Übernahme der Querreihe noch eine Ausrichtfunktion ausführen kann. Wie ein Vergleich der Figuren 1 und 2 erkennen läßt, wird der Schieber 12 gemäß Pfeil 24 in Förderrichtung 6 relativ zum Rahmen 10 des Übertragungsbandes 9 zurückbewegt, während das Band 2 des Zuführbandes 1 kontinuierlich weiter angetrieben wird. Demzufolge gelangt diese Querreihe auf das Übertragungsband 9, wobei in der vollkommenen aufgenommenen Stellung (Figur 2) der Schieber 12 seine andere Endposition erreicht hat. Während dieser Förderbewegung ist auch das Band 15 des Weitergabebandes 14 gemäß Pfeil 19 weitergelaufen, so daß eine zuvor bereits auf dem Weitergabeband 14 befindliche Reihe von Gegenständen 5 entsprechend weitertransportiert worden ist. Gleiches gilt auch für Querreihen von Gegenständen 5 auf dem Zuführband 1.

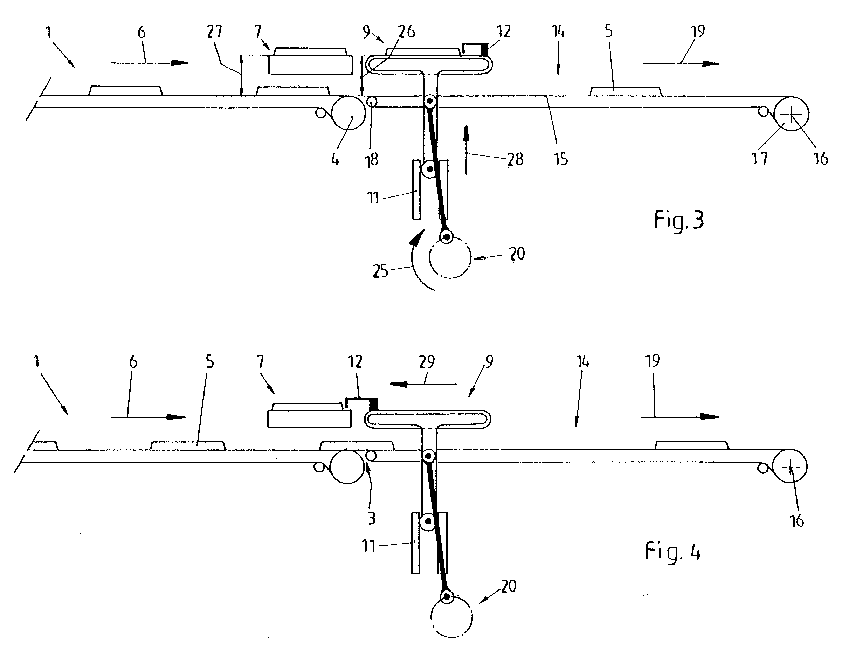

Wie ein Vergleich der Figuren 2 und 3 erkennen läßt, wurde der gemeinsame Schwenkantrieb 20 gemäß Pfeil 25 betätigt, wodurch das Übertragungsband 9 angehoben und auch das Weitergabeband 14 verschwenkt wurde. Der vertikale Versatz 26 zwischen den Anfängen des Übertragungsbandes 9 und des Weitergabebandes 14 entspricht dem vertikalen Abstand 27 zwischen den Förderebenen des Zuführbandes 1 und des Abführbandes 7. Damit ist sichergestellt, daß am Ende der gemeinsamen Bewegung des Übertragungsbandes 9 und des Weitergabebandes 14 gemäß Pfeil 28 das Weitergabeband 14 an das Zuführband 1 Anschluß hat und gleichzeitig Anschlußmöglichkeit zwischen dem Übertragungsband 9 und dem Abführband 7 besteht (Figur 3).

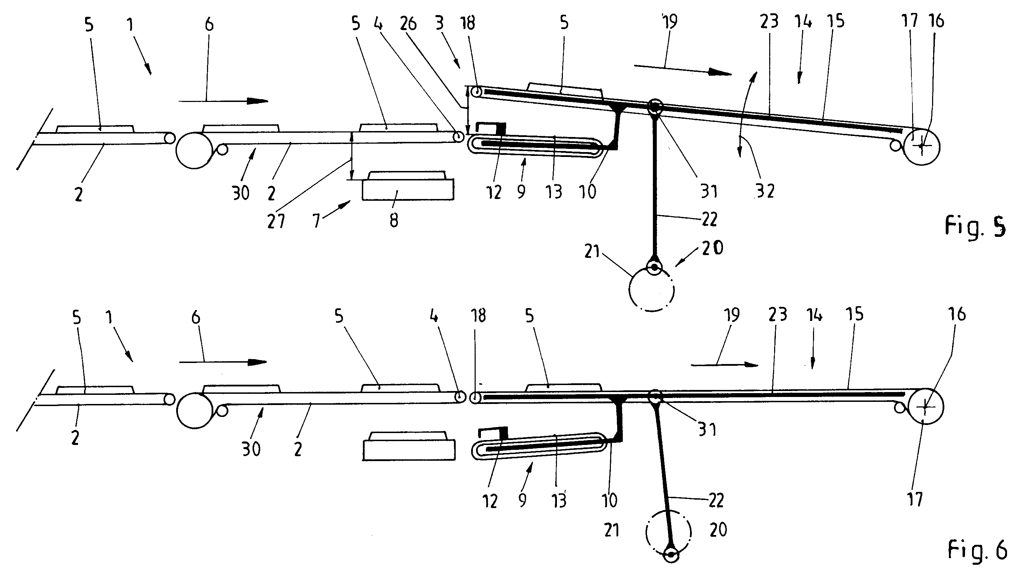

Wie ein Vergleich der Darstellungen der Figuren 3 und 4 erkennen läßt, ist es damit möglich, gleichzeitig eine Querreihe von Gegenständen von dem Übertragungsband 9 auf das Abführband 7 gemäß Pfeil 29 aufzuschieben, wozu der Antrieb des Schiebers 12 entsprechend gesteuert wird. Gleichzeitig kann eine andere Querreihe von Gegenständen 5 an der Übergabestelle 3 zwischen dem Ende des Zuführbandes 1 und dem Anfang 18 des Weitergabebandes 14 übertreten und von dem Weitergabeband 14 weiter in Richtung des Pfeiles 19 gefördert werden.

An einer nachgeschalteten Übergabevorrichtung setzt sich die Arbeitsweise dann entsprechend fort.

Eine weitere Ausführungsform der Übergabevorrichtung ist in den Figuren 5 und 6 dargestellt, wobei das Abführband 7 nicht oberhalb der Förderebene aus Zuführband 1 und Weitergabeband 14, sondern unterhalb dieser Ebene angeordnet ist. Das Zuführband 1 ist geteilt ausgebildet, um Lücken zwischen den Querreihen der Gegenstände 5 schließen zu können. Zu diesem Zweck ist dem umlaufenden Band 2 ein Teilzuführband 30 nachgeschaltet, welches ebenfalls ein umlaufendes Band 2 aufweist. Das Teilzuführband 30 ist mit einem getrennt steuerbaren Antrieb versehen, der hier nicht dargestellt ist. Auch hier ist die Umlenkwalze 4 des Bandes 2 des Teilzuführbandes 30 ortsfest angeordnet. Die Gegenstände 5 werden in Querreihen in Förderrichtung 6 zu der Übergabestelle 3 herangeführt. Das unterhalb der Förderebene angeordnete Abführband 7 weist auch hier ein umlaufendes Band 8 mit einem eigenen Antrieb auf. Das Übertragungsband 9 besitzt einen Rahmen 10, der mit dem Rahmen 23 des Weitergabebandes 14 fest verbunden ist. Es ist gleichsam ein gemeinsamer Rahmen geschaffen, wobei der Rahmen 10 mit seiner Hauptebene gegenüber der Hauptebene des Rahmens 23 um einen Winkel geneigt angeordnet ist, der der Hälfte des Verschwenkwinkels des Weitergabebandes 14 um seine Achse 16 entspricht. Auch hier besitzt das Übertragungsband 9 einen Schieber 12 und ein daran befestigtes Band 13. Auch das Weitergabeband 14 besitzt hier ein umlaufendes Band 15.

Die Achse 16, um die das Weitergabeband 14 schwenkbar ist, wird von einer Umlenkwalze 17 realisiert. Der Anfang 18 des Weitergabebandes 14 ist in der in Figur 5 gezeigten Übernahmestellung angehoben, so daß die Querreihe von Gegenständen 5, die sich auf dem umlaufenden Band 15 des Weitergabebandes 14 befindet, gemäß Pfeil 19 weitergefördert wird. Das Übertragungsband 9 ist zur Aufnahme der nächsten Querreihe aus Gegenständen 5 bereit, die über das Teilzuführband 30 und die Umlenkwalze 4 abgegeben werden. Der Schwenkantrieb 20 besitzt auch hier einen Kurbeltrieb 21 mit einer Schubstange 22, die in einem Schwenklager 31 an dem gemeinsamen Rahmen des Rahmens 10 des Übertragungsbandes und des Rahmens 23 am Weitergabeband angreift. Damit ist eine Verschwenkung der Einheit aus Übertragungsband 9 und Weitergabeband 14 um die Achse 16 gemäß Doppelpfeil 32 möglich. Auch hier entspricht der Versatz 26 dem Abstand 27 zwischen den Förderebenen des Zuführbandes 1 und des Abführbandes 7, so daß nach etwa einer halben Umdrehung des Schwenkantriebes 20 aus Figur 5 heraus die Relativlage der Teile erreicht wird, die in Figur 6 dargestellt ist. Dabei hat sowohl das Übertragungsband 9 Anschluß an das Abführband 7, wie auch das Weitergabeband 14 an das Zuführband 1 bzw. das Teilzuführband 30. Bei Vergleich der Figuren 5 und 6 fällt auf, daß die Schräglage des Übertragungsbandes 9 in beiden Stellungen sehr gering ist. Die Schwenkachse liegt in der Achse 16 und nicht etwa in der Förderebene des Abführbandes 7.

### BEZUGSZEICHENLISTE

- 1: - Zuführband
- 2: - Band
- 3: - Übergabestelle
- 4: - Umlenkwalze
- 5: - Gegenstand
- 6: - Förderrichtung
- 7: - Abführband
- 8: - Band
- 9: - Übertragungsband
- 10: - Rahmen
- 11: - Führung
- 12: - Schieber
- 13: - Band
- 14: - Weitergabeband
- 15: - Band
- 16: - Achse
- 17: - Umlenkwalze
- 18: - Anfang
- 19: - Pfeil
- 20: - Schwenkantrieb
- 21: - Kurbeltrieb
- 22: - Schubstange
- 23: - Rahmen
- 24: - Pfeil
- 25: - Pfeil
- 26: - Versatz
- 27: - Abstand
- 28: - Pfeil
- 29: - Pfeil
- 30: - Teilzuführband
- 31: - Schwenklager
- 32: - Doppelpfeil

## Patentansprüche

1. Übergabevorrichtung für auf einem umlaufenden endlosen Zuführband (1) in Querreihen ankommende Gegenstände (5), insbesondere Süßwarenteile, wie Schokoladetafeln, Riegel, Pralinen od. dgl., an mindestens zwei Verarbeitungsstellen, wobei dem Zuführband (1) ein insbesondere in gleicher Höhe und gleicher Förderrichtung (6) arbeitendes Weitergabeband (14) einerseits und ein außerhalb der Ebene des Zuführbandes (1) angeordnetes Abführband (7) andererseits nachgeschaltet sind und zwischen Zuführband (1) und Abführband (7) ein Übertragungsband (9) vorgesehen ist, das mit dem Weitergabeband (14) gekoppelt ist und über einen gemeinsamen Schwenkantrieb (20) für die Bewegungen des Übertragungsbandes (9) und des gekoppelten Weitergabebandes (14) zwischen einem Anschluß des Weitergabebandes (14) an das Zuführband (1) und einem Anschluß des Übertragungsbandes (9) an das Zuführband (1) hin- und herbeweglich angetrieben ist, wobei das dem Weitergabeband (14) bzw. dem Übertragungsband (9) zugekehrte Ende des Zuführbandes (1) ortsfest angeordnet ist, zumindest der dem Ende des Zuführbandes (1) zugekehrte Anfang (18) des Weitergabebandes (14) um eine sich quer zur Förderrichtung (6) erstreckende Achse (16) schwenkbar ist und das Übertragungsband (9) um eine sich quer zur Förderrichtung (6) erstreckende Achse schwenkbar ist**, dadurch gekennzeichnet**, daß das Übertragungsband (9) zum gleichzeitigen Aufschieben einer Querreihe von Gegenständen (5) von dem Übertragungsband (9) auf das Abführband (7) einen hin- und hergehend angetriebenen Schieber (12) mit Band (13) aufweist, und daß das Übertragungsband (9) um die sich quer zur Förderrichtung (6) erstreckende Achse (16) des Weitergabebandes (14) oder um eine jenseits dieser Achse (16) im Unendlichen angeordnete Achse schwenkbar ist.

2. Übergabevorrichtung nach Anspruch 1, **dadurch gekennzeichnet**, daß das Übertragungsband (9) und zumindest der schwenkbare Teil des Weitergabebandes (14) mechanisch fest gekoppelt, insbesondere auf einem gemeinsamen Rahmen (10, 23) angeordnet, sind.

3. Übergabevorrichtung nach Anspruch 1, **dadurch gekennzeichnet**, daß das Übertragungsband (9) für seine Bewegung in etwa vertikaler Richtung über translatorische, insbesondere vertikal wirkende, Führungselemente (11) geführt ist.

4. Übergabevorrichtung nach Anspruch 2 oder 3, **dadurch gekennzeichnet**, daß als gemeinsamer Antrieb (20) für die Bewegungen des Übertragungsbandes (9) und des Weitergabebandes (14) ein Kurbeltrieb (21) vorgesehen ist.

5. Übergabevorrichtung nach Anspruch 2 oder 3, **dadurch gekennzeichnet**, daß das Zuführband (1) geteilt ausgebildet ist, und daß zwei getrennt steuerbare Antriebe für die beiden in Förderrichtung (6) aneinander anschließenden Teile des Zuführbandes (1) vorgesehen ist.

6. Übergabevorrichtung nach Anspruch 2 oder 3, **dadurch gekennzeichnet**, daß das Übertragungsband (9) oberhalb oder unterhalb des Weitergabebandes (14) angeordnet ist.

7. Übergabevorrichtung nach Anspruch 2 oder 3, **dadurch gekennzeichnet**, daß das Übertragungsband (9) ein Band (13) aufweist, welches mit einem in Förderrichtung (6) des Zuführbandes (1) wirkenden hin- und hergehenden Antrieb gemäß den Pfeilen (24, 29) versehen ist.

8. Übergabevorrichtung nach Anspruch 6, **dadurch gekennzeichnet**, daß das Übertragungsband (9) in Förderrichtung kürzer als das Weitergabeband (14) ausgebildet ist.

9. Übergabevorrichtung nach Anspruch 6, **dadurch gekennzeichnet**, daß an dem Band (13) des Übertragungsbandes (9) ein geführter Schieber (12) angeordnet ist.

10. Übergabevorrichtung nach Anspruch 2 oder 3, **dadurch gekennzeichnet**, daß der vertikale Versatz (26) der Anfänge des Übertragungsbandes (9) und des Weitergabebandes (14) mit dem vertikalen Abstand (27) zwischen Zuführband (1) und Abführband (7) übereinstimmt.

11. Übergabevorrichtung nach Anspruch 2, **dadurch gekennzeichnet**, daß die mechanisch fest miteinander gekuppelten Rahmen (10, 23) des Weitergabebandes (14) und des Übertragungsbandes (9) in einem Winkel zueinander angeordnet sind.

## Claims

1. Delivery apparatus for articles (5), in particular items of confectionery such as chocolate bars, chocolates or the like, arriving in transverse rows on a circulating endless feed belt (1) at at least two processing locations, the feed belt (1) having arranged downstream of it, on the one hand, a passing-on belt (14) operating, in particular, at the same level and in the same conveying direction (6), and on the other hand, a discharge belt (7), arranged outside the plane of the feed belt (1), and there being provided, between the feed belt (1) and the discharge belt (7), a transfer belt (9) coupled to the passing-on belt (14) and having a common pivot drive (20) which moves the transfer belt (9) and the coupled passing-on belt (14) back and forth between a connection of the passing-on belt (14) to the feed belt (1) and a connection of the transfer belt (9) to the discharge belt (7), the end of the feed belt (1) which faces the passing-on belt (14) and the transfer belt (9), respectively, being arranged in a stationary manner, at least the beginning (18) of the passing-on belt (14) which faces the end of the feed belt (1) being pivotable about an axis (16) extending transversely with respect to the conveying direction (6), and the transfer belt (9) being pivotable about an axis extending transversely with respect to the conveying direction (6), **characterized in** that the transfer belt (9) includes a guided slide (12) with an endless belt (13) moving back and forth to simultaneously push a transverse row of articles (5) from the transfer belt (9) onto the discharge belt (7), and that the transfer belt (9) is pivotable about an axis of the passing-on belt (14) extending transversely to the conveying direction (6) or about an axis located in the infinity beyond the axis (16).

2. Delivery apparatus according to claim 1, **characterized in** that the transfer belt (9) and at least the pivotable part of the passing-on belt (14) are arranged mechanically coupled in a fixed manner, in particular on a common frame (10, 23).

3. Delivery apparatus according to claim 1, **characterized in** that in that the transfer belt (9) is guided by translatory, in particular vertically operating, guide elements (11) for its movement in approximately a vertical direction.

4. Delivery apparatus according to claim 2 or 3, **characterized in** that a crank mechanism (21) is provided as a common drive (20) for the movements of the transfer belt (9) and of the passing-on belt (14).

5. Delivery apparatus according to claim 2 or 3, **characterized in** that the feed belt (1) is designed in a divided manner, and that two separately controllable drives are provided for the two parts adjoining one another in the conveying direction (6) of the feed belt (1).

6. Delivery apparatus according to claim 2 or 3, **characterized in** that the transfer belt (9) is arranged above or beneath the passing-on belt (14).

7. Delivery apparatus according to claim 2 or 3, **characterized in** that the transfer belt (9) includes a belt (13) having a drive acting in the conveying direction (6) of the feed belt (1) back and forth according to arrows (24, 29).

8. Delivery apparatus according to claim 5, **characterized in** that the transfer belt (9) is designed to be shorter in the conveying direction than the passing-on belt (14).

9. Delivery apparatus according to claim 6, **characterized in** that a guided slide (12) is arranged at the belt (13) of the transfer belt (9).

10. Delivery apparatus according to claim 2 or 3, **characterized in** that the vertical offset (26) of the beginnings of the transfer belt (9) and of the passing-on belt (14) corresponds to the vertical spacing (27) between the feed belt (1) and the discharge belt (7).

11. Delivery apparatus according to claim 2, **characterized in** that the frames (10, 23) coupled to one another mechanically in a fixed manner of the passing-on belt (14) and of the transfer belt (9) are arranged at an angle with respect to one another.

## Revendications

1. Dispositif de transfert pour des objets (5) arrivant en rangées transversales sur une bande d'amenée (1) tournant sans fin, en particulier des pièces de confiseries telles que des tablettes de chocolat, des barres, des pralines ou similaires, à au moins deux points de traitement, dans lequel en aval de la bande d'amenée (1) sont montées d'une part une bande de prolongation (14) fonctionnant en particulier à même hauteur et dans le même sens de transport (6) et, d'autre part, une bande d'évacuation (7) disposée à l'extérieur du plan de la bande d'amenée (1), et entre la bande d'amenée (1) et la bande d'évacuation (7) est prévue une bande de transfert (9), qui est couplée à la bande de prolongation (14) et qui est entraînée dans un mouvement de va-et-vient, par l'intermédiaire d'un dispositif d'entraînement oscillant (20) commun pour les mouvements de la bande de transfert (9) et de la bande de prolongation (14) accouplée, entre un état de raccordement de la bande de prolongation (14) à la bande d'amenée (1) et un état de raccordement de la bande de transfert (19) à la bande d'amenée (1), et dans lequel l'extrémité de la bande d'amenée (1) tournée vers la bande de prolongation (14) ou la bande de transfert (9), est disposée fixement, au moins l'amorce (18) de la bande de prolongation (14) tournée vers l'extrémité de la bande d'amenée (1), pouvant pivoter autour d'un axe (16) s'étendant transversalement au sens de transport (6) et la bande de transfert (9) étant susceptible de pivoter autour d'un axe s'étendant transversalement au sens de transport (6), caractérisé en ce que la bande de transfert (9) comporte un pousseur (12) entraîné dans un mouvement de va-et-vient avec une bande (13), pour la poussée simultanée d'une rangée transversale d'objets (5) de la bande de transfert (9) sur la bande d'évacuation (7), et en ce que la bande de transfert (9) est susceptible de pivoter autour de l'axe (16) s'étendant transversalement au sens de transport (6), de la bande de prolongation (14) ou autour d'un axe disposé à l'infini de l'autre côté de cet axe (16).

2. Dispositif de transfert selon la revendication 1, caractérisé en ce que la bande de transfert (9) et au moins la partie pivotante de la bande de prolongation (14) sont fixement couplées mécaniquement, en particulier disposées sur un cadre (10, 23) commun.

3. Dispositif de transfert selon la revendication 1, caractérisé en ce que la bande de transfert (9) est guidée pour son déplacement en direction à peu près verticale, par l'intermédiaire d'éléments (11) de guidage en translation, agissant en particulier verticalement.

4. Dispositif de transfert selon la revendication 2 ou 3, caractérisé en ce qu'il est prévu un mécanisme à manivelle (21) comme dispositif d'entraînement (20) commun pour les déplacements de la bande de transfert (9) et de la bande de prolongation (14).

5. Dispositif de transfert selon la revendication 2 ou 3, caractérisé en ce que la bande d'amenée (1) est en plusieurs parties, et en ce que deux dispositifs d'entraînement commandables séparément sont prévus pour les deux parties de la bande d'amenée (1) que se suivent l'une l'autre dans le sens de transport (6).

6. Dispositif de transfert selon la revendication 2 ou 3, caractérisé en ce que la bande de transfert (9) est disposée au-dessus ou au-dessous de la bande de prolongation (14).

7. Dispositif de transfert selon la revendication 2 ou 3, caractérisé en ce que la bande de transfert (9) comporte une bande (13), qui est équipée d'un dispositif d'entraînement marchant en va-et-vient dans le sens de transport (6) de la bande d'amenée (1), selon les flèches (24, 29).

8. Dispositif de transfert selon la revendication 6, caractérisé en ce que la bande de transfert (9) est plus courte dans le sens de transport que la bande de prolongation (14).

9. Dispositif de transfert selon la revendication 6, caractérisé en ce qu'un pousseur (12) guidé est disposé sur la bande (13) de la bande de transfert (9).

10. Dispositif de transfert selon la revendication 2 ou 3, caractérisé en ce que le décalage vertical (26) des amorces de la bande de transfert (9) et de la bande de prolongation (14) coïncide avec la distance verticale (27) entre la bande d'amenée (1) et la bande d'évacuation (7).

11. Dispositif de transfert selon la revendication 2, caractérisé en ce que les cadres (10, 23), accouplés fixement mécaniquement entre eux de la bande de prolongation (14) et de la bande de transfert (9) sont disposés en formant un angle l'un par rapport à l'autre.
